# EUROPÄISCHE PATENTSCHRIFT

(11) **EP 2 394 935 B1**
(45) Veröffentlichungstag und Bekanntmachung des Hinweises auf die Patenterteilung: **02.05.2012**
(21) Anmeldenummer: 11164524.8
(22) Anmeldetag: 03.05.2011
(51) Int. Cl.: B65G 19/24, B65B 11/10, B65B 21/24

(54) **Einschlagvorrichtung mit einem stabförmigen Einschlagelement**
Striking device with a rod-shaped striking element
Dispositif d'impact doté d'un élément d'impact en forme de tige

(30) Priorität: 20.05.2010 DE 202010007012 U
(43) Veröffentlichungstag der Anmeldung: 14.12.2011
(73) Patentinhaber: Krones AG, 93073 Neutraubling (DE)
(72) Erfinder: Kästner, Florian, 83071 Stephanskirchen (DE)
(74) Vertreter: Benninger, Johannes

(56) Entgegenhaltungen:
- US-A- 2 100 959
- US-A- 2 575 610
- US-A- 3 961 702
- US-A- 4 663 914

## Beschreibung

Die vorliegende Erfindung betrifft eine Einschlagvorrichtung mit einem stabförmigen Einschlagelement mit den Merkmalen des unabhängigen Anspruchs 1.

Nach der Herstellung von Getränkebehältern werden diese meist zu Gebinden zusammengefasst und ggf. anschließend verpackt, insbesondere mit Schrumpffolien, die von einem Folienvorrat abgewickelt und in einem kontinuierlichen Prozess während der Förderung der Gebinde um diese geschlagen und anschließend durch Wärmeeinwirkung fixiert wird.

Eine solche Vorrichtung zum Umwickeln einer Folie um eine Gruppe von Gegenständen ist aus der DE 296 08 343 U1 bekannt. Die Vorrichtung ermöglicht die Umwicklung mehrerer Gegenstände nacheinander, was durch ein oder mehrere hintereinander auf einem Zugmittel angeordnete Folienmitnahmeelemente realisiert ist.

Weitere Verpackungsmaschinen zum Umhüllen von Gegenständen mit Folienabschnitten sind bspw. in der DE 603 10 836 T2 und in der DE 20 2008 007 497 U1 offenbart.

Das Dokument US 2 575 610 zeigt Einschlagelemente die in Korrespondierenden Aufnahmeelementen der jeweiligen Zugmittel weitgehend spielfrei und formschlüssig fixierbar sind.

Bei diesem bekannten Prozess des Verpackens von Gebinden, speziell bei der Erstellung von sog. Schrumpfgebinden ("Shrink-Packs"), wird eine genau definierte Folienstrecke um die zu verpackende Gebindeformation gewickelt. Die Wicklungsrichtung der Folie entspricht hierbei der Laufrichtung der Maschine. Erzeugt wird diese einschichtige Wicklung mit Hilfe eines Stabes, der um das stetig geförderte Gebinde kreist. Um diese kreisende Bewegung zu erzeugen, wird der Stab an zwei parallel und synchron laufenden Ketten befestigt und geführt. Die derzeit bekannten Befestigungen der Stäbe bestehen aus einem Grundträger der Stäbe und einen aufgeschweißten Federblech. Unterschieden wird hierbei nach Laufrichtung der Maschine und der Seite, an der sich der Bediener befindet. Die beiden Seiten der Maschine werden demnach in die sog. Serviceseite und die sog. Bedienseite unterteilt.

Die Befestigung der Folieneinschlagstäbe auf der Serviceseite erfolgt in der Regel mittels eines in Richtung der Kettenachsen geöffneten Grundträgers. Beim Montieren wird der Folienstab in diese Öffnung eingeführt und über das Federblech fixiert bzw. geklemmt. Die Befestigung der Folieneinschlagstäbe auf der Bedienseite erfolgt in der Regel mittels eines in Laufrichtung der Maschine geöffneten Grundträgers. Zum Einsetzen des Folienstabes wird dieser zwischen den Federblechen hindurchgedrückt und somit mit gleichzeitig fixiert und geklemmt. Die Befestigung der Einschlagstabhalter an der Kette kann bspw. dadurch erfolgen, dass die Halterungen an den beiden Hohlbolzen-Ketten durch Passschrauben montiert werden.

Die Folieneinschlagstäbe können folgendermaßen aufgebaut sein. Auf dem ca. 20 mm breiten und 1000 mm langen Kohlenfaser-Stab sind an beiden Enden dünne Bleche aufgeschraubt. Diese Bleche sorgen dafür, dass das Federblech sich nicht in dem Stab einarbeitet und dienen gleichzeitig als Funktionsabfrage der Einschlagstäbe.

Mehrere Probleme bzw. Nachteile bei einer solchen Konfiguration bzw. Ausstattung sind momentan bekannt. So können sich nach längerer Betriebsdauer die aufgeschraubten Bleche am Folienstab lösen. Auch droht eine allmähliche Verformung der Federbleche am Einschlagstabhalter. Weiterhin kann das Stabmaterial abgetragen werden, woraus ein Verlust der Fixierung folgen kann. Zudem können die Passschrauben für die Befestigung der Einschlagstabhalter verformt und beschädigt werden. Diese genannten Probleme können zu einer Störung des Verarbeitungsprozesses bzw. zu einer Kollision mit zu verpackenden Gebinden und unter ungünstigen Umständen zu einer Beschädigung der Maschine führen.

Daneben lassen sich zusätzlich folgende wirtschaftliche Nachteile der bisher bekannten Befestigungsart der Folieneinschlagstäbe aufführen. So entstehen relativ hohe Kosten durch die Schweißkonstruktion der Stabhalter. Auch verursacht die verwendete Hohlbolzenkette gegenüber einer herkömmlichen Rollenkette höhere Kosten. Zudem erfordert die gesamte Montagebaugruppe des Folieneinschlagstabes einen relativ hohen Aufwand.

Ein vorrangiges Ziel der Erfindung besteht darin, die Nachteile des Standes der Technik zu beseitigen und eine verbesserte Einschlagvorrichtung für eine Vorrichtung zur Umhüllung und Verpackung einer Gruppe von auf einer Fördervorrichtung bewegten Artikeln mit bahnförmigem Material zur Verfügung zu stellen, bei welcher der Einschlagstab über eine zuverlässigere und bei längerer Betriebsdauer verschleißfrei funktionierende Befestigung und Fixierung verfügt.

Dieses Ziel der Erfindung wird mit dem Gegenstand des unabhängigen Anspruchs erreicht. Weitere vorteilhafte Ausgestaltungen lassen sich den Unteransprüchen entnehmen.

Zur Erreichung des genannten Ziels schlägt die Erfindung eine Einschlagvorrichtung einer Vorrichtung zur Umhüllung und Verpackung einer Gruppe von auf einer Fördervorrichtung bewegten Artikeln mit bahnförmigem Material vor, die ein stabförmiges und seitlich an zwei parallel angeordneten und zu beiden Seiten der Fördervorrichtung umlaufenden Zugmitteln fixiertes und von diesen bewegtes Einschlagelement aufweist, das in korrespondierenden Aufnahmeelementen der jeweiligen Zugmittel weitgehend spielfrei und formschlüssig fixierbar ist, wobei wenigstens eines der Aufnahmeelemente ein gegen die Rückstellkraft einer gefederten Feststelleinrichtung bewegliches Sicherungselement aufweist. Das mit dem beweglichen Sicherungselement versehene erste Aufnahmeelement kann insbesondere eine U-förmige Aufnahmetasche aufweisen, deren Kontur dem Querschnitt des Einschlagelements entspricht, so dass dieses zuverlässig und weitgehend spielfrei dort fixiert werden kann. Dies wird dadurch erreicht, dass die einseitig offene U-förmige Aufnahmetasche in der Sicherungslage des Sicherungselements umfänglich geschlossen ist. Um den Stab einsetzen und entnehmen zu können, ist die U-förmige Aufnahmetasche in der Entsicherungslage des Sicherungselements zur Entnahme des Einschlagelements in definierter Richtung einseitig geöffnet. Um das Sicherungselement zwischen seinen beiden erwähnten Endlagen bewegen zu können, kann das Sicherungselement über wenigstens ein Führungselement in einer Richtung parallel zur Längserstreckungsrichtung des Einschlagelements zwischen der entlasteten Sicherungslage und der federbelasteten Entsicherungslage zwischen zwei Anschlägen verschiebbar sein.

Eine weitere bevorzugte Ausgestaltung der erfindungsgemäßen Einschlagvorrichtung sieht vor, dass das zweite Aufnahmeelement eine das Einschlagelement von allen Seiten formschlüssig umgreifende und fixierende Aufnahmetasche aufweist. Das Einschlagelement ist somit in die Aufnahmetasche des zweiten Aufnahmeelements in axialer Richtung zur Öffnung der Aufnahmetasche einsteckbar.

Das Einschlagelement bzw. der Einschlagstab kann insbesondere eine flache Kontur mit rechteckförmigem Querschnitt und jeweils abgerundeten Kanten aufweisen. Als Material eignet sich insbesondere Stahl oder ein Verbundmaterial, das bspw. ein Kohlefaserverbundwerkstoff sein kann.

Weiterhin kann vorgesehen sein, dass wenigstens eines der Aufnahmeelemente ein federbelastetes Druckstück zur weitgehend spielfreien Fixierung des im Aufnahmeelement gehaltenen freien Endes des Einschlagelements an einer seiner Flachseiten aufweist. Das Druckstück kann vorzugsweise zwischen der Flachseite des Einschlagelements und einer am Aufnahmeelement lösbar fixierten Abdeckung geklemmt sein.

Zusammengefasst lässt sich die vorliegende Erfindung folgendermaßen charakterisieren. Bei der erfindungsgemäßen Einschlagvorrichtung wurde der Folieneinschlagstabhalter weiterentwickelt und verbessert. Die Befestigung der Folieneinschlagstäbe auf der Serviceseite erfolgt dadurch, dass der Folienstab in Richtung der Kettenachsen in einen Grundträger eingeführt wird. Die Klemmung des Stabes hingegen wird nicht wie bisher über ein Federblech erzeugt, sondern über ein eingelegtes Druckstück, das mit einer Federkraft beaufschlagt ist. Der Stab kann nun auf die bisher verwendeten Aufschraubbleche verzichten, drückt den Einleger zurück und erzeugt eine Gegenkraft. Diese Federkraft erzeugt auf der oberen Staboberfläche eine Flächenpressung, die für die Fixierung des Stabes sorgt. Weiterhin kann durch diese Flächenpressung das Schwingen bzw. Vibrieren des Stabes vermindert werden. Dies hat zur Folge, dass das Abtragen von Material am Folienstab reduziert wird. Weiterhin wird der Halter nicht wie bisher auf eine Hohlbolzen-Kette aufgeschraubt, sondern mit einen Verbindungsglied mit verlängerten Bolzen gesteckt und fixiert. Die bisher erforderliche Schweißbaugruppe wird aufgelöst und gegen eine kostengünstigere Montagebaugruppe ersetzt.

Die Befestigung der Folieneinschlagstäbe auf der Bedienseite ist ebenfalls verbessert. Der Grundaufbau des Folieneinschlagstabhalters ähnelt dem auf der Serviceseite. Der Unterschied ist die in Laufrichtung geöffnete Klemmung. Für eine Sicherung des Stabes dient ein neuartiger und sehr zuverlässig funktionierender Sicherheitsverschluss. Dieser Verschluss wird zum Montieren bzw. zum Demontieren des Stabes mit der Hand nach hinten, in Richtung der Kette gezogen, so dass der Stab entgegen der Laufrichtung eingelegt oder entnommen werden kann. Die Schließkraft der Sicherung wird ebenfalls durch die wirkende Federkraft auf die Zylinderstifte erzeugt.

Mit der verbesserten Einschlagvorrichtung wurden Versuche gemacht, bei denen die Montierbarkeit und die Funktion geprüft wurden. Weiterhin wurde speziell die Klemmkraft des Halters gegenüber dem Folienstab geprüft. Es stellte sich heraus, dass der Halter wesentlich einfacher zu handhaben ist. Das Montieren und Demontieren der Folienstäbe kann wesentlich einfacher und anwenderfreundlicher als bisher durchgeführt werden. Die nun erhöhte Klemmkraft auf den Stab sorgt für eine einwandfreie Aufnahme des Stabes im Grundkörper und für dessen weitgehend spielfreie Fixierung. Zudem ist das neue System kostengünstiger in der Fertigung wie auch in der Montage.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine perspektivische Teilansicht einer Ausführungsvariante einer erfindungsgemäßen Einschlagvorrichtung.
Fig. 2 zeigt eine Seitenansicht, eine Draufsicht sowie eine Schnittsicht auf einen Teil der Einschlagvorrichtung gemäß Fig. 1.
Fig. 3 zeigt eine perspektivische Explosionsdarstellung eines Teils der Einschlagvorrichtung gemäß Fig. 1.
Fig. 4 zeigt eine weitere perspektivische Teilansicht einer Ausführungsvariante der erfindungsgemäßen Einschlagvorrichtung.
Fig. 5 zeigt eine Seitenansicht, eine Draufsicht sowie eine Schnittsicht auf einen Teil der Einschlagvorrichtung gemäß Fig. 4.
Fig. 6 zeigt eine perspektivische Explosionsdarstellung eines Teils der Einschlagvorrichtung gemäß Fig. 4.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

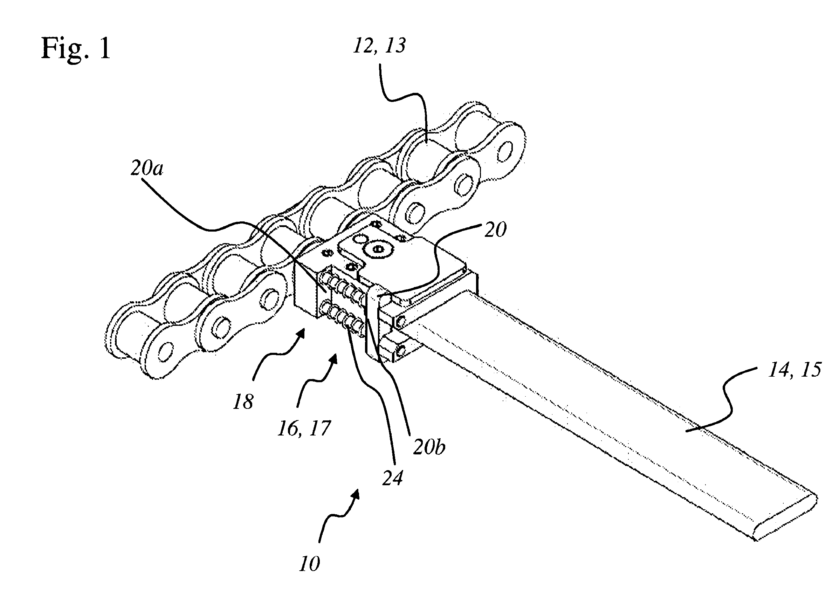

Die Darstellungen der Figuren 1 bis 3 zeigen mehrere Ansichten einer Ausführungsvariante einer erfindungsgemäßen Einschlagvorrichtung, die im vorliegenden Zusammenhang allgemein mit der Bezugsziffer 10 bezeichnet ist. Die in Teilen dargestellte Einschlagvorrichtung 10 ist ein wesentlicher Bestandteil einer hier nicht dargestellten Vorrichtung zur Umhüllung und Verpackung einer Gruppe von auf einer Fördervorrichtung bewegten Artikeln mit bahnförmigem Material wie bspw. Schrumpffolie. Die Einschlagvorrichtung 10 umfasst ein stabförmiges Einschlagelement 14, das seitlich an zwei Aufnahmeelementen 16 befestigt ist. Die beiden Aufnahmeelemente 16 sind in gegenüber liegender Anordnung jeweils an den zu beiden Seiten der Fördervorrichtung umlaufenden Zugmitteln 12 fixiert und sorgen damit für die umlaufende Bewegung des Einschlagelements 14. Das stabförmige Einschlagelement 14 ist in den beiden korrespondierenden Aufnahmeelementen 16 der jeweiligen Zugmittel 12 weitgehend spielfrei und formschlüssig fixiert. Das in den Figuren 1 bis 3 gezeigte Aufnahmeelement 16 zeigt die sog. Bedienseite der Einschlagvorrichtung 10 und weist in diesem Zusammenhang ein gegen die Rückstellkraft einer gefederten Feststelleinrichtung 18 bewegliches Sicherungselement 20 auf. Das in den Figuren 1 bis 3 in verschiedenen Ansichten dargestellte und mit dem beweglichen Sicherungselement 20 versehene erste Aufnahmeelement 16 weist eine U-förmige Aufnahmetasche 22 auf, deren Kontur dem Querschnitt des Einschlagelements 14 entspricht, so dass dieses zuverlässig und weitgehend spielfrei dort fixiert werden kann. Dies wird dadurch erreicht, dass die einseitig offene U-förmige Aufnahmetasche 22 in einer Sicherungslage des Sicherungselements 20 umfänglich geschlossen ist. Um den flachen Einschlagstab 15 einsetzen und entnehmen zu können, ist die U-förmige Aufnahmetasche 22 in der Entsicherungslage des Sicherungselements 20 zur Entnahme des Einschlagelements 14 bzw. des Einschlagstabs 15 in definierter Richtung einseitig geöffnet. Um das Sicherungselement 20 zwischen seinen beiden erwähnten Endlagen bewegen zu können, ist das Sicherungselement 20 über zwei parallele Führungselemente 24 in einer Richtung parallel zur Längserstreckungsrichtung des Einschlagelements 14 zwischen der entlasteten Sicherungslage und der federbelasteten Entsicherungslage zwischen zwei Anschlägen 20a, 20b verschiebbar.

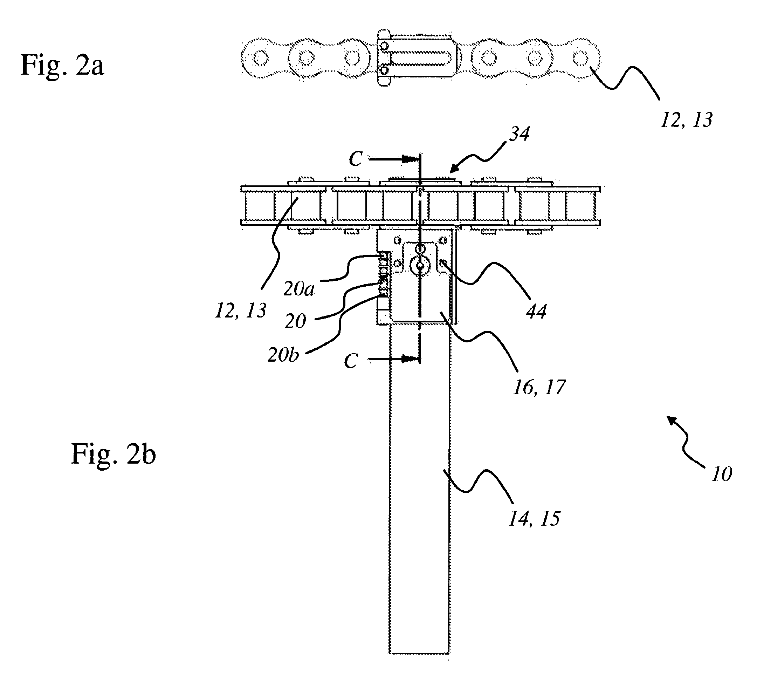

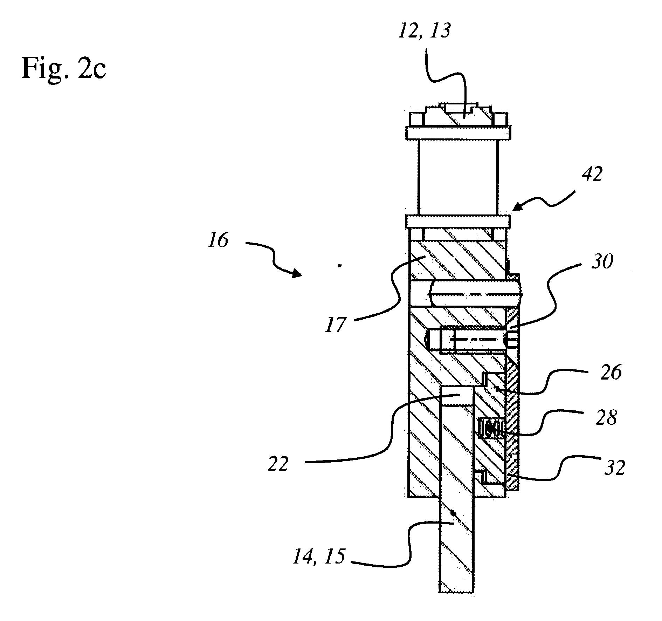

Wie anhand des in den Figuren 1 bis 6 gezeigten Ausführungsbeispiels der erfindungsgemäßen Einschlagvorrichtung erkennbar, ist das Zugmittel 12 durch eine an sich bekannte Rollenkette 13 gebildet, an der die Aufnahmeelemente 16 befestigt sind. Das Aufnahmeelement 16 wird im vorliegenden Zusammenhang auch als Stabhalter 17 bezeichnet, da damit der Einschlagstab 15 gehalten und an der Rollenkette 13 verankert ist. Die Klemmung des Stabes 15 erfolgt über ein eingelegtes Druckstück 26, das mittels einer Druckfeder 28 gegen einen mit einer Schraube 30 befestigten Deckel 32 verspannt ist, wie dies in der Schnittansicht der Fig. 2c erkennbar ist. Der Stab 15 kann somit auf die bisher verwendeten Aufschraubbleche verzichten, drückt das eingelegte und verspannte Druckstück 26 zurück und erzeugt eine Gegenkraft. Diese Federkraft erzeugt auf der oberen Staboberfläche eine Flächenpressung, die für die Fixierung des Stabes 15 in der Aufnahmetasche 22 des Aufnahmeelements 16 bzw. Stabhalters 17 sorgt. Weiterhin wird durch diese Flächenpressung das Schwingen bzw. Vibrieren des Stabes 15 vermindert, da er auf diese Weise weitgehend spielfrei verankert ist.

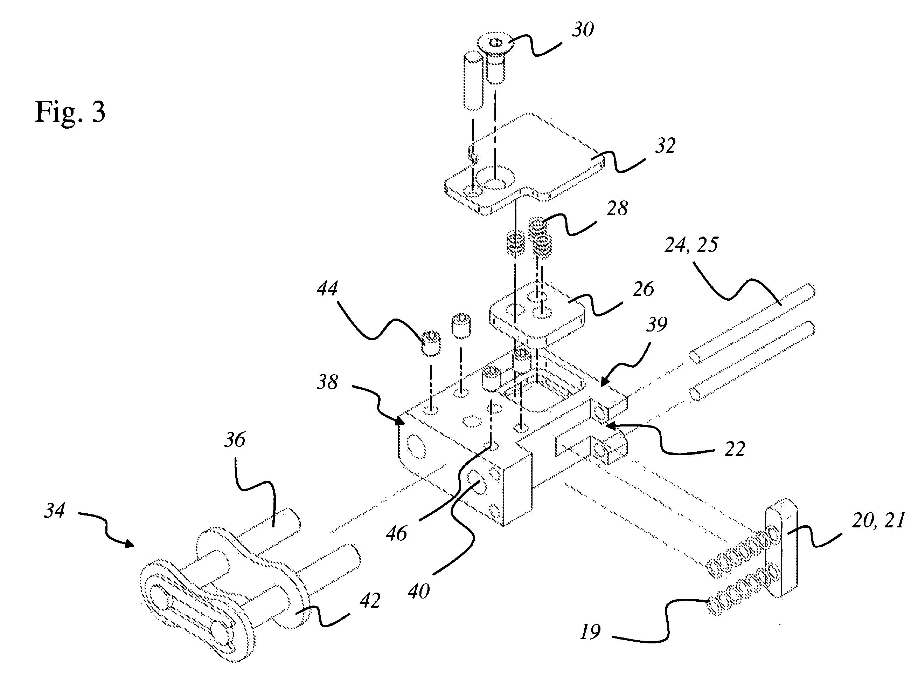

Das Aufnahmeelement 16 bzw. der Stabhalter 17 ist mit der Rollenkette 13 verschraubt, wie dies in der perspektivischen Explosionsdarstellung der Fig. 3 erkennbar ist. Hierzu weist die Rollenkette 13 ein Verbindungsglied 34 mit verlängerten Bolzen 36 auf, auf die der Stabhalter 17 gesteckt und fixiert wird. Der Stabhalter 17 weist hierzu an seiner dem Stab 15 abgewandten Stirnseite 38 zwei mit den verlängerten Bolzen 36 fluchtende Bohrungen 40 auf, welche die Bolzen 36 aufnehmen, bis die Stirnseite 38 an der Lasche 42 des Verbindungsgliedes 34 anliegt. In dieser montierten Lage werden die Bolzen 36 mittels vier Klemmschrauben 44 befestigt, die in entsprechende Gewindebohrungen 46 an der Oberseite 39 des Stabhalters 17 eingedreht werden, bis sie auf den Mantelseiten der Bolzen 36 aufsitzen und diese unverrückbar klemmen.

Die Fig. 3 verdeutlicht zudem den Aufbau der Feststelleinrichtung 18 mit dem auf den Führungselementen 24 verschiebbaren Sicherungselement 20. Diese zusammenwirkenden Bauteile bilden einen neuartigen und zuverlässig funktionierenden Sicherheitsverschluss für den Stab 15. Dieser Verschluss wird zum Montieren bzw. zum Demontieren des Stabes 15 mit der Hand betätigt, indem die das Sicherungselement 20 bildende Platte 21 gegen die Rückstellkraft der beiden auf den Führungselementen 24 bzw. Stiften 25 geführten Federn 19 nach hinten, in Richtung der Kette 13 gezogen wird, so dass der Stab 15 entgegen der Laufrichtung eingelegt oder entnommen werden kann. Die Schließkraft der Sicherung bzw. Feststelleinrichtung 18 ist durch die Federkraft der beiden auf den Stiften 25 geführten Federn 19 definiert.

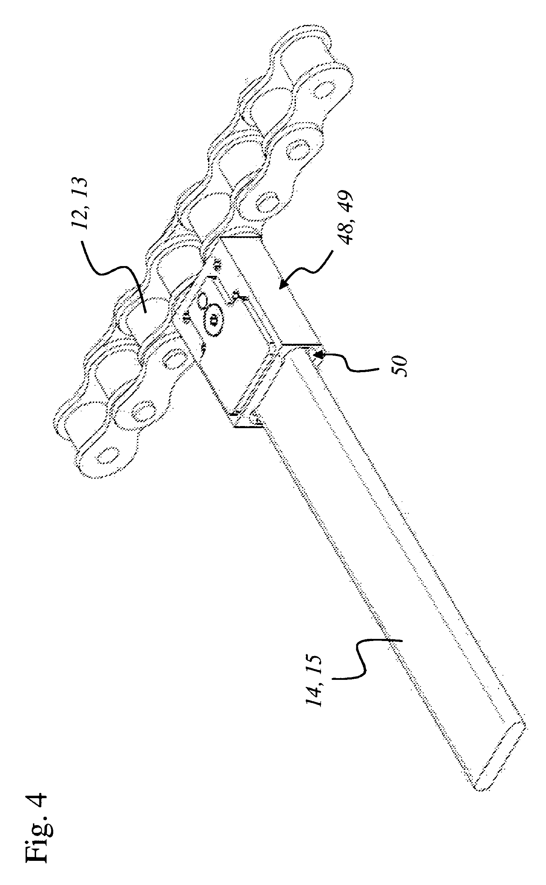

Wie anhand der Figuren 4 bis 6 verdeutlicht, weist das dem ersten Aufnahmeelement 16 fluchtend gegenüber liegend angeordnete zweite Aufnahmeelement 48, hier auch als zweiter Stabhalter 49 bezeichnet, eine das Einschlagelement 14 bzw. den Einschlagstab 15 von allen Seiten formschlüssig umgreifende und fixierende Aufnahmetasche 50 auf. Das Einschlagelement 14 bzw. der Stab 15 ist somit in die Aufnahmetasche 50 des zweiten Aufnahmeelements 48 in axialer Richtung zur Öffnung der Aufnahmetasche 50 hin einschieb- bzw. einsteckbar.

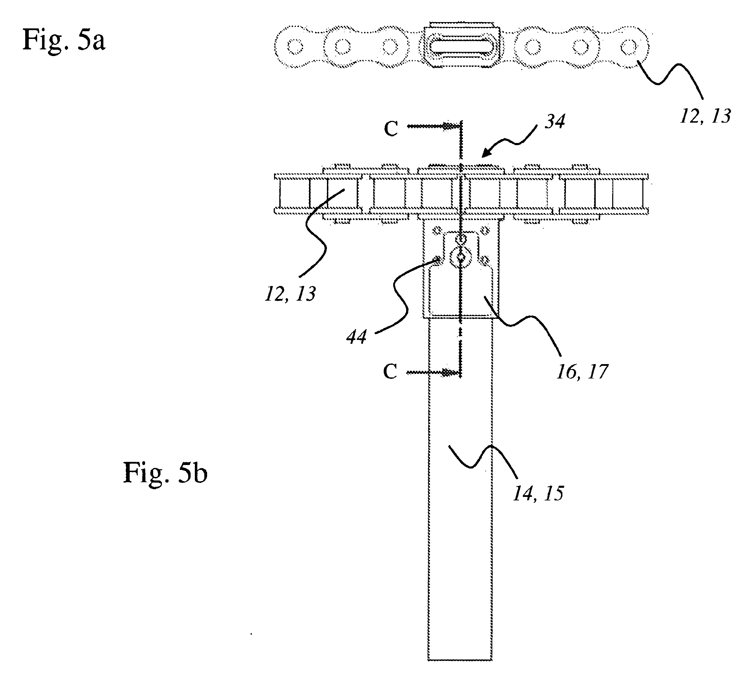

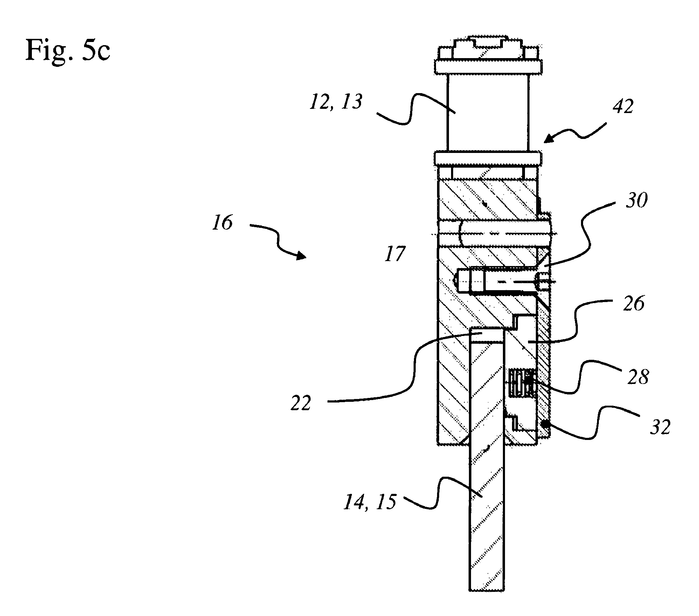

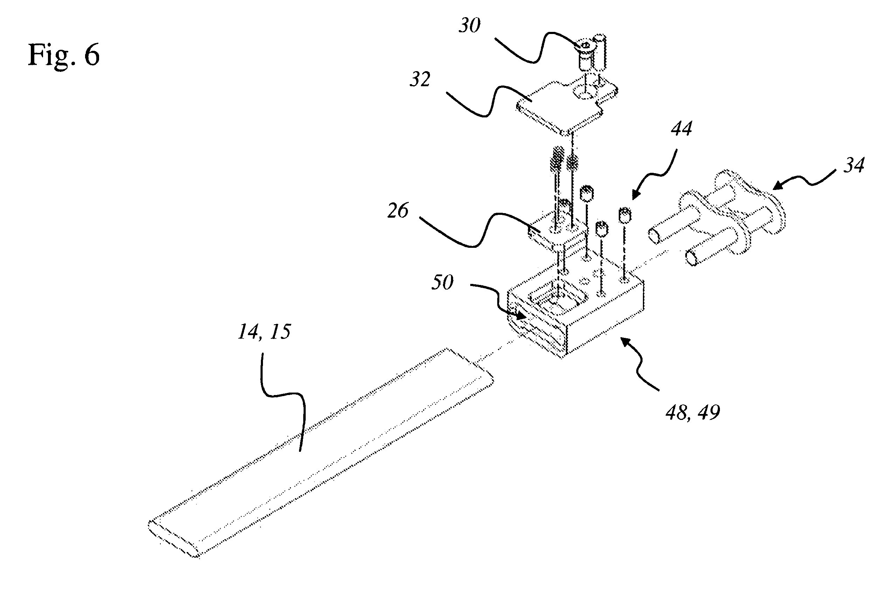

Der übrige Aufbau des zweiten Aufnahmeelements 48 ist den Figuren 5a, 5b, 5c und 6 entnehmbar und entspricht mitsamt seiner Klemmung und seiner Befestigung an der Rollenkette weitestgehend der Gestaltung und der Konstruktion des ersten Aufnahmeelements 16. Der wesentliche Unterschied liegt in der umfänglich geschlossenen Kontur der zweiten Aufnahmetasche 50 des zweiten Aufnahmeelements 48 bzw. Stabhalters 49 (vgl. Fig. 6).

Das zweite Aufnahmeelement 48 bildet im vorliegenden Zusammenhang die sog. Serviceseite der Einschlagvorrichtung 10. D.h., bei der Montage des Stabes 15 wird er zunächst in die Aufnahmetasche 50 an der Serviceseite (Figuren 4 bis 6) eingesteckt, wonach er an der Bedienseite durch Betätigung der Feststelleinrichtung (Figuren 1 bis 3) eingeschoben und fixiert wird.

Das Einschlagelement 14 bzw. der Einschlagstab 15 weist eine flache Kontur mit rechteckförmigem Querschnitt und jeweils abgerundeten Kanten auf. Als Material eignet sich insbesondere ein Kohlefaserverbundwerkstoff, aber bspw. auch Stahl oder Leichtmetall.

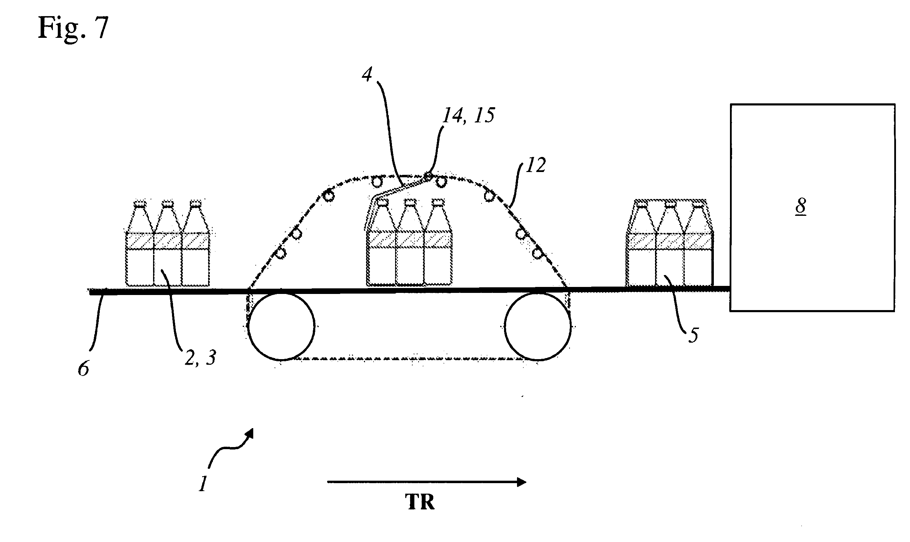

Figur 7 zeigt allgemein eine Vorrichtung 1 zur Umhüllung und Verpackung von Artikeln 2. Die Artikel 2 werden zuerst in einer definierten Zusammenstellung 3 gruppiert und über ein Förderband 6 der Vorrichtung 1 zugeführt. Die Vorrichtung 1 umfasst eine Einschlagkette bzw. ein Zugmittel 12 zur Führung eines Mitnehmers bzw. Einschlagstabes 14, 15. Das Verpackungsmaterial, insbesondere die Folie 4 wird über den Einschlagstab 15 geführt und um die Artikelgruppe 3 herum gewickelt. Die umhüllte Artikelgruppe 5 wird anschließend weiteren Verarbeitungsvorrichtungen, beispielsweise einem Schrumpftunnel 8, zugeführt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 1: Vorrichtung zur Umhüllung und Verpackung
- 2: Artikel
- 3: Zusammenstellung / Artikelgruppe
- 4: Verpackungsmittel /Folie
- 5: Umhüllte Artikelgruppe
- 6: Förderband
- 8: Schrumpftunnel
- 10: Einschlagvorrichtung
- 12: Zugmittel
- 13: Rollenkette
- 14: Einschlagelement
- 15: Stab, Einschlagstab
- 16: Erstes Aufnahmeelement
- 17: Erster Stabhalter
- 18: Feststelleinrichtung
- 19: Feder
- 20: Sicherungselement
- 20a: Anschlag
- 20b: Anschlag
- 21: Platte
- 22: Aufnahmetasche
- 24: Führungselement
- 25: Stift
- 26: Druckstück
- 28: Druckfeder
- 30: Schraube
- 32: Deckel
- 34: Verbindungsglied
- 36: Verlängerter Bolzen
- 38: Stirnseite
- 39: Oberseite
- 40: Bohrung
- 42: Lasche
- 44: Klemmschraube
- 46: Gewindebohrung
- 48: Zweites Aufnahmeelement
- 49: Zweiter Stabhalter
- 50: Aufnahmetasche

- TR: Transportrichtung

## Patentansprüche

1. Einschlagvorrichtung (10) einer Vorrichtung (1) zur Umhüllung und Verpackung einer Gruppe (3) von auf einer Fördervorrichtung (6) bewegten Artikeln (2) mit bahnförmigem Material (4), mit einem stabförmigen und seitlich an zwei parallel angeordneten und zu beiden Seiten der Fördervorrichtung umlaufenden Zugmitteln (12) fixiertes und von diesen bewegtes Einschlagelement (14), das in korrespondierenden Aufnahmeelementen (16, 48) der jeweiligen Zugmittel (12) weitgehend spielfrei und formschlüssig fixierbar ist, **dadurch gekennzeichnet, dass** wenigstens eines der Aufnahmeelemente (16, 48) ein gegen die Rückstellkraft einer gefederten Feststelleinrichtung (18) bewegliches Sicherungselement (20) aufweist.

2. Einschlagvorrichtung (10) nach Anspruch 1, bei der das mit dem beweglichen Sicherungselement (20) versehene erste Aufnahmeelement (16) eine U-förmige Aufnahmetasche (22) aufweist, deren Kontur dem Querschnitt des Einschlagelements (14) entspricht.

3. Einschlagvorrichtung (10) nach Anspruch 2, bei der die einseitig offene U-förmige Aufnahmetasche (22) in der Sicherungslage des Sicherungselements (20) umfänglich geschlossen ist.

4. Einschlagvorrichtung (10) nach Anspruch 2 oder 3, bei der die U-förmige Aufnahmetasche (22) in der Entsicherungslage des Sicherungselements (20) zur Entnahme des Einschlagelements (14) in definierter Richtung einseitig geöffnet ist.

5. Einschlagvorrichtung (10) nach einem der Ansprüche 1 bis 4, bei der das Sicherungselement (20) über wenigstens ein Führungselement (24) in einer Richtung parallel zur Längserstreckungsrichtung des Einschlagelements (14) zwischen der entlasteten Sicherungslage und der federbelasteten Entsicherungslage zwischen zwei Anschlägen (20a, 20b) verschiebbar ist.

6. Einschlagvorrichtung (10) nach einem der Ansprüche 1 bis 5, bei der das zweite Aufnahmeelement (48) eine das Einschlagelement (14) von allen Seiten formschlüssig umgreifende und fixierende Aufnahmetasche (50) aufweist.

7. Einschlagvorrichtung (10) nach Anspruch 6, bei der das Einschlagelement (14) in die Aufnahmetasche (50) des zweiten Aufnahmeelements (48) in axialer Richtung zur Öffnung der Aufnahmetasche (50) einsteckbar ist.

8. Einschlagvorrichtung (10) nach einem der Ansprüche 1 bis 7, bei der das Einschlagelement (14) eine flache Kontur mit rechteckförmigem Querschnitt und jeweils abgerundeten Kanten aufweist.

9. Einschlagvorrichtung (10) nach einem der Ansprüche 1 bis 8, bei dem wenigstens eines der Aufnahmeelemente (16, 48) ein federbelastetes Druckstück (26) zur weitgehend spielfreien Fixierung des im Aufnahmeelement (16, 48) gehaltenen freien Endes des Einschlagelements (14) an einer seiner Flachseiten aufweist.

10. Einschlagvorrichtung (10) nach Anspruch 9, bei dem das Druckstück (26) zwischen der Flachseite des Einschlagelements (14) und einer am Aufnahmeelement (16, 48) lösbar fixierten Abdeckung (32) geklemmt ist.

## Claims

1. Wrapping device (10) for an apparatus (1) for enveloping and packaging a group (3) of articles (2) while they are being moved on a conveyor device (6) with a web-shaped material (4), whereby said wrapping device (10) comprises a rod-shaped wrapping element (14), which is laterally fixed to two parallely disposed traction means (12) circulating on both sides of the conveyor device (6), whereby said wrapping element (14) is moved by these traction means (12), and whereby this wrapping element (14) is further fixable largely form-lockingly and without play in corresponding receiving elements (16, 48) of the respective traction means (12), **characterized in that** at least one of the receiving elements (16, 48) comprises a securing element (20) that can be moved against the return force of a spring locking device (18).

2. Wrapping device (10) according to claim 1, whereby the first receiving element (16) with the movable securing element (20) comprises a U-shaped receiving pocket (22), the shape of which matches the profile of the wrapping element (14).

3. Wrapping device (10) according to claim 2, whereby the U-shaped receiving pocket (22), which is open on one side, will be peripherally surrounded and closed when the securing element (20) is locked in its securing position.

4. Wrapping device (10) according to claim 2 or 3, whereby the securing element (20) in its unsecured position causes the U-shaped receiving pocket (22) to be open on one side for extracting the wrapping element (14) in the defined direction.

5. Wrapping device (10) according to one of the claims 1 to 4, whereby the securing element (20) is slidable in a direction parallel to that of the longitudinal axis of the wrapping element (14) between the spring-released securing position and the spring-loaded unsecured position along at least one guiding element (24) and between two stops (20a, 20b).

6. Wrapping device (10) according to one of the claims 1 to 5, whereby the second receiving element (48) comprises a receiving pocket (50) that surrounds the wrapping element (14) form-lockingly from all sides and fixates it.

7. Wrapping device (10) according to claim 6, whereby the wrapping element (14) can be inserted into the receiving pocket (50) of the second receiving element (48) in axial direction of the receiving pocket's (50) opening.

8. Wrapping device (10) according to one of the claims 1 to 7, whereby the wrapping element (14) has a flat shape with a rectangular profile and in each case rounded edges.

9. Wrapping device (10) according to one of the claims 1 to 8, whereby at least one of the receiving elements (16, 48) on one of its flat sides comprises a spring-loaded pressure piece (26) for fixating, largely without play, the free end of the wrapping element (14) being retained in the receiving element (16, 48).

10. Wrapping device (10) according to claim 9, whereby the pressure piece (26) is clamped in between the flat side of the wrapping element (14) and a cover plate (32) that is detachably fixed to the receiving element (16, 48).

## Revendications

1. Dispositif de pliage (10) d'un dispositif (1) d'enveloppage et d'emballage d'un groupe (3) d'articles (2) mus sur un dispositif de manutention (6) avec un matériel (4) en forme de bande, avec un élément de pliage (14) en forme de tige et fixé latéralement sur deux moyens de traction (12) disposés en parallèle et courant sur les deux côtés le dispositif de manutention et mu par ces derniers, lequel élément de pliage peut être fixé en grande partie sans jeu et à contact positif dans des éléments de logement (16, 48) correspondants des moyens de traction (12) respectifs, **caractérisé en ce que** au moins un des éléments de logement (16, 48) présente un élément de blocage (20) mobile contre la force de rappel d'un équipement d'arrêt (18) à ressort.

2. Dispositif de pliage (10) selon la revendication 1, dans lequel le premier élément de logement (16) doté de l'élément de blocage (20) mobile présente une poche de logement en forme de U (22) dont le contour correspond à la section transversale de l'élément de pliage (14).

3. Dispositif de pliage (10) selon la revendication 2, dans lequel la poche de logement (22) en forme de U ouverte sur un côté est fermée sur son pourtour dans la position de blocage de l'élément de blocage (20).

4. Dispositif de pliage (10) selon la revendication 2 ou 3, dans lequel la poche de logement (22) en forme de U est ouverte sur un côté dans un sens défini dans la position de déverrouillage de l'élément de blocage (20) afin de permettre l'extraction de l'élément de pliage (14).

5. Dispositif de pliage (10) selon l'une quelconque des revendications 1 à 4, dans lequel l'élément de blocage (20) peut être déplacé par l'intermédiaire d'au moins un élément de guidage (24) dans un sens parallèle au sens d'extension longitudinal de l'élément de pliage (14) entre la position de blocage détendue et la position de déverrouillage équilibrée par ressort entre deux butées (20a, 20b).

6. Dispositif de pliage (10) selon l'une quelconque des revendications 1 à 5, dans lequel le deuxième élément de logement (48) présente une poche de logement (50) qui court sur tous les côtés de l'élément de pliage (14) avec contact positif et le fixe.

7. Dispositif de pliage (10) selon la revendication 6, dans lequel l'élément de pliage (14) peut être enfiché dans la poche de logement (50) du deuxième élément de logement (48) dans le sens axial vers l'ouverture de la poche de logement (50).

8. Dispositif de pliage (10) selon l'une quelconque des revendications 1 à 7, dans lequel l'élément de pliage (14) présente un contour plat avec section transversale rectangulaire et des arêtes chaque fois arrondies.

9. Dispositif de pliage (10) selon l'une quelconque des revendications 1 à 8, dans lequel au moins un des éléments de logement (16, 48) présente sur l'un de ses côtés plats une pièce de pression (26) équilibrée par ressort pour la fixation en grande partie sans jeu de l'extrémité libre de l'élément de pliage (14) retenu dans l'élément de logement (16, 48).

10. Dispositif de pliage (10) selon la revendication 9, dans lequel la pièce de pression (26) est serrée entre le côté plat de l'élément de pliage (14) et une chape (32) fixée de manière détachable sur l'élément de logement (16, 48).
